# EUROPÄISCHE PATENTSCHRIFT

(11) **EP 3 683 449 B1**
(45) Veröffentlichungstag und Bekanntmachung des Hinweises auf die Patenterteilung: **09.02.2022**
(21) Anmeldenummer: 19217633.7
(22) Anmeldetag: 18.12.2019
(51) Int. Cl.: F04D 29/058, F04D 19/04, F16C 32/04

(54) **MAGNETLAGER UND VAKUUMGERÄT**
MAGNETIC BEARING AND VACUUM APPARATUS
PALIER MAGNÉTIQUE ET APPAREIL SOUS VIDE

(43) Veröffentlichungstag der Anmeldung: 22.07.2020
(73) Patentinhaber: Pfeiffer Vacuum GmbH, 35614 Asslar (DE)
(72) Erfinder: CONRAD, Armin, 35745 Herborn (DE)
(74) Vertreter: Manitz Finsterwald Patent- und Rechtsanwaltspartnerschaft mbB

(56) Entgegenhaltungen:
- WO-A1-2019/085845
- DE-A1-102016 208 341
- US-A- 5 525 848
- US-A1- 2007 114 795
- US-A1- 2007 132 327
- US-A1- 2008 185 928
- US-A1- 2008 206 079

## Beschreibung

Die vorliegende Erfindung betrifft ein Magnetlager, insbesondere für eine Vakuumpumpe. Die Erfindung betrifft auch ein Vakuumgerät, insbesondere ein Vakuumpumpsystem, insbesondere mit einer Vakuumpumpe mit einem solchen Magnetlager.

Bei einem beispielhaften Vakuumgerät des Standes der Technik sind die Lager als Permanentmagnetlager (also als Lager mit Permanentmagneten) ausgeführt. Permanentmagnetlager benötigen keine aktive Regelung, sind aber teuer.

Aus US 5,525,848 A ist ein Magnetlagersystem mit einem Magnetlager und einem elektrischen Generator zum Aktivieren des Magnetlagers bekannt.

US 2008/206079 A1 offenbart eine Aufsetzlagervorrichtung mit einem Außenring, der an einem Gehäuse befestigt ist, einem Innenring, der dem Außenring radial gegenüberliegt, einem Zwischenring, der radial zwischen dem Außenring und dem Innenring angeordnet ist, einer ersten Kugel, die zwischen dem Außenring und dem Zwischenring angeordnet ist; und einer zweiten Kugel, die zwischen dem Zwischenring und dem Innenring angeordnet ist. Die Aufsetzlagervorrichtung ist so konfiguriert, dass, wenn ein Magnetlager normal arbeitet, eine Drehwelle und der Innenring in einen berührungslosen Zustand gebracht werden, und dass währenddessen, wenn das Magnetlager normalerweise nicht arbeitet, die Drehwelle von der Innenseite getragen wird Ring, um die Drehwelle gegen das Gehäuse zu stützen.

DE 10 2016 208341 A1 betrifft eine Dampfturbinenanlage umfassend eine Dampfturbine mit einem Rotor, welcher von wenigstens einem aktiven Magnetlager gelagert ist, sowie einen vom Rotor angetriebenen Generator zur Erzeugung elektrischen Stroms. Der Generator liefert im Generatorbetrieb permanent den elektrischen Strom für das aktive Magnetlager, wobei zwischen dem Generator und dem Magnetlager ein Gleichrichter angeordnet ist, der die vom Generator bereitgestellte Wechselspannung in eine Gleichspannung umrichtet.

Es ist eine Aufgabe der Erfindung, kostengünstige Magnetlager bereitzustellen, die einfach technisch umsetzbar sind.

Diese Aufgabe wird durch ein Magnetlager, insbesondere für eine Vakuumpumpe, mit den Merkmalen des Anspruchs 1 gelöst, und insbesondere dadurch, dass das Magnetlager zumindest folgendes aufweist: einen Stator; einen Elektromagnet; einen in dem Stator mittels zumindest des Elektromagnets gelagerten Rotor; eine zum Regeln einer relativen Position des Rotors bezüglich des Stators mittels des Elektromagnets eingerichtete Regelungseinheit; und eine zum Erzeugen einer Spannung basierend auf einer Bewegung des Rotors bezüglich des Stators und zum Bereitstellen der erzeugten Spannung als Versorgungsspannung für die Regelungseinheit eingerichtete Generatoreinheit mit einem Generator-Stator und einem Generator-Rotor; wobei bezüglich einer Rotationsachse des Rotors: der Rotor radial außerhalb des Stators angeordnet ist, der Elektromagnet und die Regelungseinheit in radialer Richtung übereinander angeordnet sind, die Regelungseinheit und der Generator-Stator in radialer Richtung übereinander angeordnet sind, und der Elektromagnet und der Generator-Stator in axialer Richtung übereinander angeordnet sind.

Mit anderen Worten wird erfindungsgemäß die Versorgungsspannung für die Regelungseinheit eines aktiven Magnetlagers mittels einer direkt in dem Magnetlager angeordneten Generatoreinheit erzeugt. Es wird also ein autonomes, selbstversorgendes Aktiv-Magnetlager (welches insbesondere in Turbopumpen oder Turbomolekularpumpen eingesetzt werden kann) bereitgestellt.

In einer Ausführungsform ist die Generatoreinheit ferner zum Bereitstellen der erzeugten Spannung als Versorgungsspannung für den Elektromagnet eingerichtet. Durch Bereitstellen der (induktiv) erzeugten Spannung als Versorgungsspannung für den Elektromagnet (also den Aktor des Aktiv-Magnetlagers) und für ggf. vorhandene Sensoren kann das Magnetlager vollständig ohne externe Strom- oder Spannungsversorgung betrieben werden. Dies ermöglicht eine einfache technische Umsetzung, da keine externen Anschlüsse zur elektrischen Energieversorgung des Magnetlagers vorgesehen werden müssen.

In einer Weiterbildung umfasst die Generatoreinheit mindestens eine im Stator angeordnete Spule und eine mit dem Rotor verbundene Welle mit Permanentmagneten wechselnder Polarität. Bevorzugt ist die Generatoreinheit zum Erzeugen der Spannung bei Rotation der Welle eingerichtet, so dass die Permanentmagnete die mindestens eine Spule zeitlich wechselnd magnetisch durchfluten und somit eine Spannung induzieren.

Mit einer solchen Anordnung von Permanentmagneten und mindestens einer Spule kann eine Bewegung der Welle genutzt werden, um eine Spannung zu induzieren, die dann als die Versorgungsspannung für das Magnetlager verwendet werden kann.

In einer Ausführungsform ist die Generatoreinheit ferner zum Gleichrichten und Stabilisieren der induzierten Spannung eingerichtet. Die durch die rotierenden Permanentmagneten in der Spule induzierte Spannung kann Schwankungen enthalten, die beispielsweise durch die variierenden effektiven Querschnitte der magnetischen Felder der Permanentmagnete in der mindestens einen Spule bedingt sein können. Schwankende Spannungen können aber insbesondere in elektronischen Vorrichtungen in der Generatoreinheit (beispielsweise zum Ermitteln von Sensorsignalen und darauf resultierenden Aktorstellsignalen) unerwünscht sein. Mittels Gleichrichten und Stabilisieren (z.B. durch eine oder mehrere Dioden und eine nachgeschaltete Kapazität) können stabile Spannungen erzeugt werden, die zur Spannungsversorgung der verschiedenen Bestandteile der Generatoreinheit geeignet sind.

In einer Ausgestaltung ist die Regelungseinheit auf einer Platine in dem Stator angeordnet. Die Platine kann insbesondere auf einem flexiblen Träger angeordnet sein. Eine solche Platine kann als Flex-PCB (englisch: printed circuit board; deutsch: Leiterplatte) bezeichnet werden. Durch den flexiblen Träger ist es möglich, die Platine an die räumlichen Gegebenheiten in dem Magnetlager, das ein Rotationslager ist, und das dadurch eine zumindest im Wesentlichen, zumindest annähernd rotationssymmetrische Struktur aufweist, anzupassen.

Die Platine kann beispielsweise scheibenartig (oder mehrfachscheibenartig, also auf mehrere Scheiben verteilt) zumindest im Wesentlichen in mindestens einer zu einer Rotationsachse des Rotors zumindest im Wesentlichen senkrechten Ebene angeordnet sein, oder sie kann zylindrisch zumindest im Wesentlichen in einem Zylinder um die Rotationsachse des Rotors angeordnet sein.

Es kann vorgesehen sein, dass die Regelungseinheit einen Sensor umfasst, der zum Auswerten einer Trägerfrequenz, die Aktorströmen für den Elektromagnet überlagert ist, eingerichtet ist. In einem weiteren Beispiel kann die Regelungseinheit alternativ oder zusätzlich einen optischen Sensor umfassen. Der Sensor kann zum Ermitteln der relativen Position des Rotors bezüglich des Stators eingerichtet sein.

Durch den Sensor kann die relative (Ist-)Position des Rotors bezüglich des Stators ermittelt werden, so dass die Regelungseinheit eine Differenz zwischen der IstPosition und einer Soll-Position bestimmen und diese reduzieren kann.

In einer Ausführungsform umfasst das Magnetlager ferner einen Energiespeicher zum Bereitstellen der Versorgungsspannung für die Regelungseinheit. Der Energiespeicher kann insbesondere während eines Anlaufens der Welle oder Anhaltens der Welle (oder allgemein in einem Zustand, in dem sich die Welle nicht oder nur langsam dreht), die durch das Magnetlager gelagert wird, verwendet werden, um die Versorgungsspannung für die Regelungseinheit und/oder den mindestens einen Elektromagnet (insbesondere die Spulenanordnung des Elektromagneten) und/oder einen Sensor des Magnetlagers bereitzustellen. Bei niedrigen Drehzahlen der Welle kann die Spannung, die der Generator liefert, alleine nicht als Versorgungsspannung ausreichen. Durch den Energiespeicher kann so die "fehlende" Energie bereitgestellt werden, die z.B. aus vorherigen höheren Drehzahlen stammen kann.

Der Energiespeicher kann einen Akku und/oder einen Kondensator und/oder einen Superkondensator umfassen. Diese Energiespeicher können insbesondere schnell aufgeladen werden und/oder auch über längere Zeiträume Energie speichern.

In einer Weiterbildung kann das Magnetlager ferner ein zum Lagern des Stators während eines Stillstands des Stators eingerichtetes Fanglager umfassen. Das Fanglager kann einen Permanentmagnet umfassen. Alternativ oder zusätzlich kann das Fanglager ein mechanisches Lager, insbesondere ein aus einem Kugel-oder Gleitlager bestehendes Lager, umfassen. Mit einem solchen Fanglager kann es möglich sein, eine Lagerung des Rotors auch während eines Stillstands (also bei einer Drehrate von 0 Hz) oder während eines Anlaufens zu ermöglichen, ohne, dass ein Energiespeicher bereitgestellt werden muss. Ferner kann dieses Fanglager einen (konstanten) Anteil der Lagerkräfte übernehmen und damit das (aktive) Magnetlager unterstützen.

Durch die in Anspruch 1 definierten, geometrischen Merkmale kann ein Magnetlager mit kleinen Abmessungen in axialer Richtung bereitgestellt werden.

In einer alternativen Ausführungsform, die jedoch nicht Teil der Erfindung ist, können der Elektromagnet (also der Aktor), die Regelungseinheit (die den Sensor enthalten kann) und die Generatoreinheit in Richtung einer Rotationsachse des Rotors übereinander angeordnet sein. Beispielsweise kann der Elektromagnet zumindest im Wesentlichen zylindrisch in einem ersten Abschnitt des Stators entlang einer Richtung einer Rotationsachse des Rotors in einem Zylinder um die Rotationsachse des Rotors angeordnet sein, die Regelungseinheit kann zumindest im Wesentlichen zylindrisch in einem zweiten Abschnitt des Stators entlang der Richtung der Rotationsachse des Rotors in dem Zylinder um die Rotationsachse des Rotors angeordnet sein, und zumindest ein Teil der Generatoreinheit (beispielsweise eine Spulenanordnung der Generatoreinheit) kann zumindest im Wesentlichen zylindrisch in einem dritten Abschnitt des Stators entlang der Richtung der Rotationsachse des Rotors in dem Zylinder um die Rotationsachse des Rotors angeordnet sein. Dadurch kann zwar die Länge der Anordnung erhöht werden, dafür kann aber der zum Anordnen aller Bestandteile nötige Durchmesser des Stators reduziert werden.

Die Aufgabe der Erfindung wird auch durch ein Vakuumgerät, insbesondere Vakuumpumpsystem, insbesondere mit einer Vakuumpumpe, mit einem Magnetlager wie oben beschrieben gelöst.

Es kann vorgesehen sein, dass der Rotor an einer angetriebenen Welle befestigt ist. Durch die Bewegung des Rotors der angetriebenen Welle kann über die Generatoreinheit eine Versorgungsspannung für das Magnetlager bereitgestellt werden. In einer Weiterbildung ist die Welle an einer dem Magnetlager abgewandten Seite mechanisch (beispielsweise mittels eines Wälzlagers) gelagert. An der dem Magnetlager abgewandten Seite kann der Rotor angetrieben sein, so dass dort eine mechanische Lagerung bevorzugt sein kann.

Beispielsweise kann das Magnetlager in einem Hochvakuumbereich des Vakuumgeräts angeordnet sein. Insbesondere im Hochvakuumbereich des Vakuumgeräts, beispielsweise einer Turbomolekularpumpe, kann es schwierig sein, Versorgungsleitungen für ein aktives Magnetlager bereitzustellen. Mit der erfindungsgemäßen Anordnung kann die für das aktive Magnetlager nötige Energie mittels der Generatoreinheit direkt im Magnetlager gewonnen werden.

In einer Ausführungsform kann die Vakuumpumpe mehrere Magnetlager umfassen, wobei jedes Magnetlager wie oben beschrieben aufgebaut und eingerichtet sein kann. Während des autonomen Betriebs der Vakuumpumpe kann eine Kommunikation zwischen den unterschiedlichen Magnetlagern der Vakuumpumpe stattfinden. Diese Kommunikation kann beispielsweise über Glasfaserleitungen, andere bestehende Leitungen, Funk oder ähnliches erfolgen. Insbesondere bei der Kommunikation der Magnetlager über Funk kann jedes Magnetlager komplett autonom eingerichtet sein, also nicht nur autonom bezüglich der Energieversorgung, sondern auch autonom bezüglich Kommunikationsverbindungen.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C, und

- Fig. 6: eine Anordnung mit einem Magnetlager gemäß einer Ausführungsform der Erfindung.

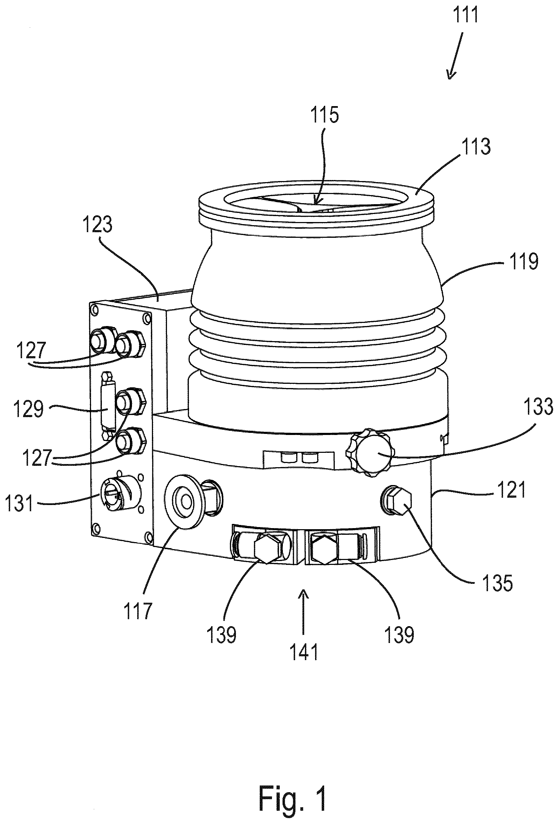

Die in Fig. 1 gezeigte Turbomolekularpumpe 111 umfasst einen von einem Einlassflansch 113 umgebenen Pumpeneinlass 115 (der einen Hochvakuumbereich der Turbomolekularpumpe 111 definiert), an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 (der einen Vorvakuumbereich der Turbomolekularpumpe 111 definiert) gefördert werden, an den eine Vorvakuumpumpe, wie etwa eine Drehschieberpumpe, angeschlossen sein kann. Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

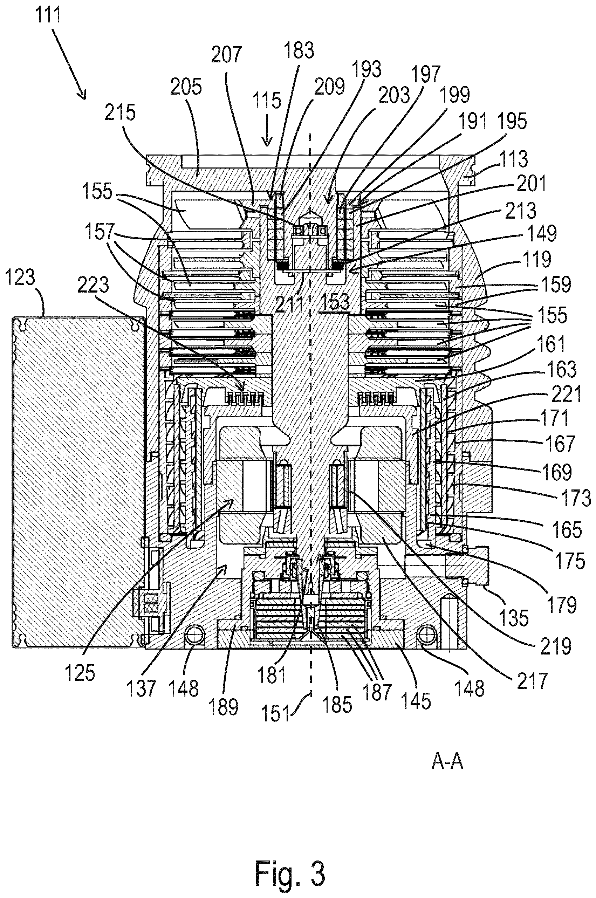

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

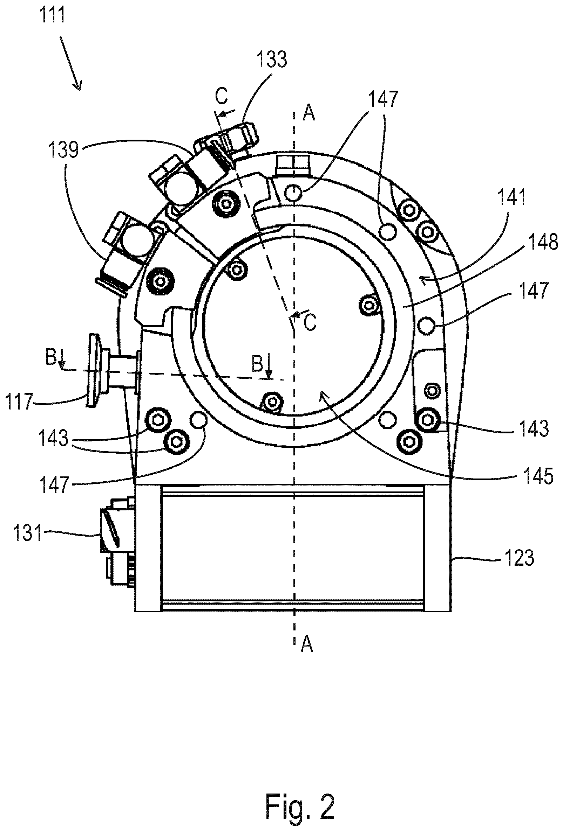

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

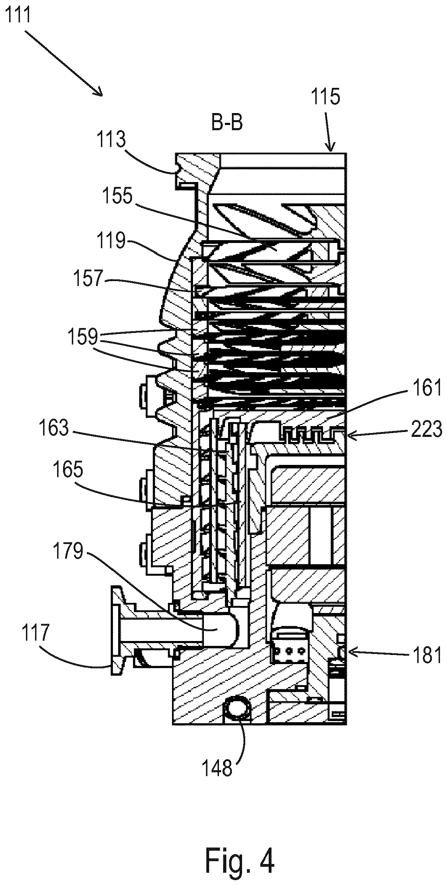

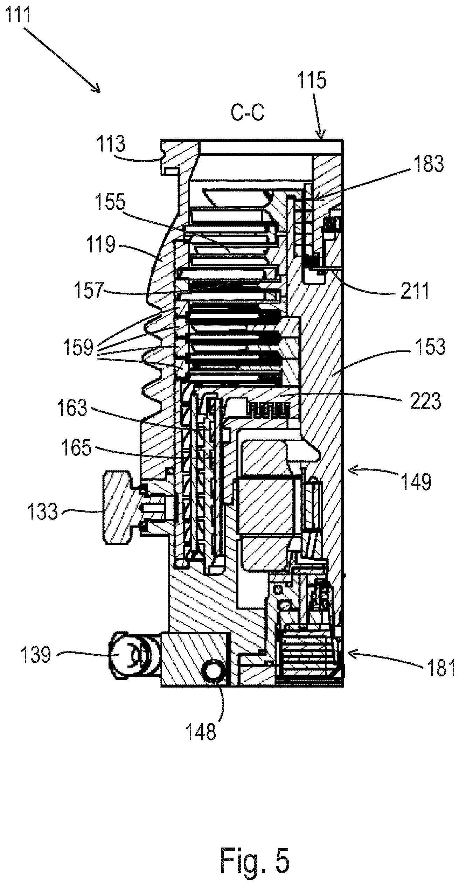

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Magnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Magnetlager 183 umfasst eine rotorseitige Lagerhälfte 191 und eine statorseitige Lagerhälfte 193. Die rotorseitige Lagerhälfte 191 kann einen oder mehrere Permanentmagnete 195, beispielsweise einen permanentmagnetischen Ring oder einen Ringstapel aus mehreren in axialer Richtung aufeinander gestapelten permanentmagnetischen Ringen, umfassen. Die rotorseitige Lagerhälfte 191 kann eine Spulenanordnung 197 umfassen, die ringförmig (entsprechend den Permanentmagneten 195) angeordnet sein kann. Die Permanentmagnete 195 und die Spulenanordnung 197 liegen einander unter Ausbildung eines radialen Lagerspalts 199 gegenüber, wobei die rotorseitigen Permanentmagnete 195 radial außen und die statorseitige Spulenanordnung 197 radial innen angeordnet sind. Bei Aktivierung der Spulenanordnung 197 ruft das in dem Lagerspalt 199 vorhandene magnetische Feld magnetische Abstoßungskräfte zwischen den Permanentmagneten 195 und der Spulenanordnung 197 hervor, welche eine radiale Lagerung der Rotorwelle 153 bewirken. Die rotorseitigen Permanentmagnete 195 sind von einem Trägerabschnitt 201 der Rotorwelle 153 getragen, welcher die Permanentmagnete 195 radial außenseitig umgibt. Die statorseitige Spulenanordnung 197 sind von einem statorseitigen Trägerabschnitt 203 getragen, welcher sich durch die Spulenanordnung 197 hindurch erstreckt und an radialen Streben 205 des Gehäuses 119 aufgehängt ist. Parallel zu der Rotationsachse 151 sind die rotorseitigen Permanentmagnete 195 durch ein mit dem Trägerabschnitt 203 gekoppeltes Deckelelement 207 festgelegt. Die statorseitige Spulenanordnung 197 ist parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und der Spulenanordnung 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

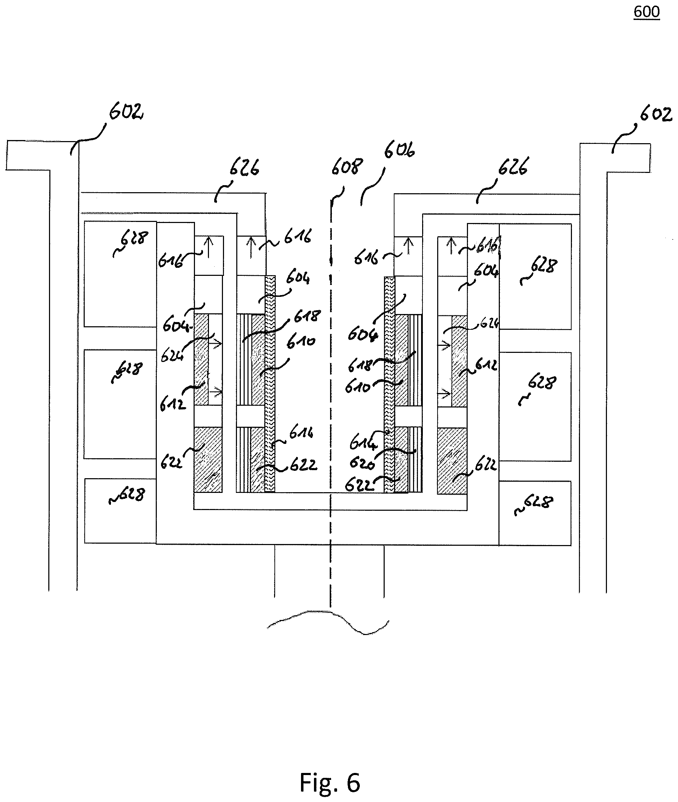

Fig. 6 zeigt einen Querschnitt einer Anordnung 600 mit einem Magnetlager gemäß einer Ausführungsform der Erfindung. Das Magnetlager kann in einem Turbomolekularpumpen-Gehäuse 602, in dem mehrere Turbomolekularpumpe-Rotor-Pumpstufen 628 angetrieben werden sollen, eingesetzt werden.

Zur aktiven Magnetlagerung können erfindungsgemäß eine Sensorik, eine Aktorik, Elektronik und eine Energiequelle vorgesehen sein. Mit der Sensorik kann die (Ist-)Position des beweglichen Teils, beispielsweise eine um eine Rotationsachse 608 rotierende Welle, erfasst werden. Mit der Aktorik (beispielsweise einem elektromagnetischen System) kann die Soll-Position des beweglichen Teils mittels kontaktloser Kraftübertragung erreicht oder angenähert werden. Die Elektronik kann die Sensorsignale des Sensors aufbereiten und einer Recheneinheit (beispielsweise einem Mikrocontroller, µC) zur Verfügung stellen, um so über geeignete Verfahren eine Leistungsstufe für die Aktoren anzusteuern. Die Aktorik kann einen Aktorstator umfassen, der Eisenbleche 622 und Aktorwicklungen 620 umfassen kann. Die Energie-(Spannungs-)Quelle, kann die Elektronikhardware und/oder die Sensoren und/oder die Aktoren (beispielsweise die Leistungsstufe der Aktoren) versorgen.

Erfindungsgemäß wird die Spannungsquelle realisiert durch einen vorteilhafterweise permanent (magnetisch) erregten Generator, der einen Teil der Energie des bewegten Teils (also des Rotors) in elektrische Energie umwandelt. Das bewegte Teil kann eine rotierende Welle mit Permanentmagneten 624 wechselnder Polarität sein, die im nicht beweglichen Teil (Stator 606) ein Spulensystem (beispielsweise mit Generatorwicklungen 618) zeitlich wechselnd magnetisch durchfluten und somit eine Spannung induzieren, die nach Gleichrichtung und Stabilisierung eine Spannungsversorgungsquelle darstellt.

Der Generator-Rotor kann beispielsweise Permantmagnete 624 und Eisenblechen 612 umfassen. Der Generator-Stator kann beispielsweise Generatorwicklungen 618 und Eisenbleche 610 umfassen.

Falls nötig, kann ein Teil der durch Induktion erhaltenen elektrischen Energie gespeichert werden (beispielsweise in einem Akku oder UltraCap), um die Versorgung schon beim Start zu gewährleisten und nicht erst ab einer bestimmten Mindestrotationsfrequenz, die ausreicht, um allein mittels der induzierten Spannung die Spannungsversorgung sicherzustellen. Optional kann für die Lagerung im Ruhezustand oder bei niedrigen Drehraten (in anderen Worten: für die 0 Hz-Stabilisierung) auch eine geringe Zahl an Permantenmagnetlager (PML)-Ringen 616 verwendet werden. Zwischen den PML-Ringen 616 und dem Generator-Stator können Distanzringe 604 vorgesehen sein, beispielsweise um einen Einfluss der PML-Ringe 616 auf die Generatorwicklungen 618 in dem Generator-Stator zu vermeiden oder zu reduzieren.

Die Sensorik, Aktorik und Elektronik können räumlich nahe zu der Energiequelle angeordnet sein, um so ein kompaktes, autonomes und selbstversorgenden Magnetlager (CAS-AMB, englisch: compact, autonomous, self-supplying active magnetic bearing) zu erhalten.

Solch ein CAS-AMB ist besonders vorteilhaft in Fällen, wo die kabelbehaftete Zuführung der elektrischen Energie unmöglich oder schwierig und aufwändig ist. Ebenso kann auf diese Weise ein rein passiv wirkendes permanentmagnetisches, aber teures, Magnetlager durch ein relativ kostengünstiges aktives Magnetlager ersetzt werden. Ferner kann durch den Einsatz von CAS-AMB die Notwendigkeit, Seltene-Erden-Materialien, deren Beschaffung schwierig sein kann, vermieden werden.

Ferner vorteilhaft ist der Einsatz solch einer CAS-AMB in Turbomolekurlarpumpen mit Hybridlagerung. Eine Hybridlagerung besteht die Lagerung des turbinenartig aufgebauten Rotors aus einem im Vorvakuumbereich angeordneten mechanischen Lager für axiale und radiale Unterstützung an einem Wellenende und einem üblicherweise rein passiven Permanent-Magnet (PM)-Magnetlager (PML) für die radiale Unterstützung am anderen Wellenende, im Hochvakuumbereich. Dieses rein passive PML kann erfindungsgemäß durch ein CAS-AMB ersetzt werden.

Die Reihenfolge und axiale Baugröße der in Fig. 6 dargestellten drei Elemente wie Generator, Aktor, und ggf. 0Hz-Stabilisierung kann je nach Schwerpunktslage des Rotors variiert werden.

Durch Überlagerung von generatorischem, aktorischem und sogar sensorischem Wirksystem kann eine signifikante Verkürzung des Systems in axialer Länge erzielt werden, anstatt diese abschnittsweise übereinander (wie in Fig. 6 gezeigt) anzuordnen.

Die Elektronik kann auf einer Elektronik-Platine 614, beispielsweise scheiben- bzw. mehrfachscheibenartig oder zylindrisch auf Flex-PCB (englisch: printed circuit board; deutsch: Leiterplatte), untergebracht werden.

Die Anordnung insbesondere der magnetischen Komponenten des Magnetlagers 600 kann sternförmig sein. Dabei ist die Darstellung von Fig. 6 so gewählt, dass der Schnitt entlang den Achsen 626 vom Mittelpunkt zu zwei Zacken des Sterns erfolgt.

In einer Ausgestaltung können die dem Vakuum zugewandten Teile nichtmetallisch gekapselt sein, um sie zum einen vor den ggf. aggressiven Gasmedien zu schützen, und zum anderen, um Entgasung ins Hochvakuum hinein zu unterdrücken.

Es kann eine den Aktorenströmen überlagerte, hohe Trägerfrequenz zur Sensorik genutzt werden.

Es versteht sich, dass, obwohl in der Beschreibung der Ausführungsformen der Generator rotorseitig Permanentmagnete enthält, alternativ oder zusätzlich auch Elektromagnete in der Rotorseite des Generators eingesetzt werden können. Ebenso kann das Magnetlager in anderen Geräten als Vakuumgeräten, und in anderen Pumpen als Turbomolekularpumpen zum Einsatz kommen.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Magnetlager
- 185: Spritzmutter
- 187: Scheibe
- 189: Einsatz
- 191: rotorseitige Lagerhälfte
- 193: statorseitige Lagerhälfte
- 195: Permanentmagnet
- 197: Spulenanordnung
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 600: Anordnung mit einem Magnetlager gemäß einer Ausführungsform
- 602: Turbomolekularpumpen-Gehäuse
- 604: Distanzring
- 606: Stator
- 608: Rotationsachse
- 610: Eisenblech
- 612: Eisenblech
- 614: Elektronik-Platine
- 616: Permanentmagnetring€ zur 0 Hz-Stabilisierung
- 618: Generatorwicklungen
- 620: Aktorwicklungen
- 622: Eisenblech
- 624: Permanentmagnet
- 626: Achsen
- 628: Turbomolekularpumpe-Rotor-Pumpstufe

## Patentansprüche

1. Magnetlager, insbesondere für eine Vakuumpumpe, aufweisend:
einen Stator (606);
einen Elektromagnet (620);
einen in dem Stator (606) mittels zumindest des Elektromagnets (620) gelagerten Rotor (612, 624);
eine zum Regeln einer relativen Position des Rotors (612, 624) bezüglich des Stators (606) mittels des Elektromagnets (620) eingerichtete Regelungseinheit (614); und
eine zum Erzeugen einer Spannung basierend auf einer Bewegung des Rotors (612, 624) bezüglich des Stators (606) und zum Bereitstellen der erzeugten Spannung als Versorgungsspannung für die Regelungseinheit (614) eingerichtete Generatoreinheit (618, 624) mit einem Generator-Stator (618) und einem Generator-Rotor (624);
**dadurch gekennzeichnet, dass**
bezüglich einer Rotationsachse (608) des Rotors (612, 624)
- der Rotor (612, 624) radial außerhalb des Stators (606) angeordnet ist,
- der Elektromagnet (620) und die Regelungseinheit (614) in radialer Richtung übereinander angeordnet sind,
- die Regelungseinheit (614) und der Generator-Stator (618) in radialer Richtung übereinander angeordnet sind, und
- der Elektromagnet (620) und der Generator-Stator (618) in axialer Richtung übereinander angeordnet sind.

2. Magnetlager nach Anspruch 1,
wobei die Generatoreinheit (618, 624) ferner zum Bereitstellen der erzeugten Spannung als Versorgungsspannung für den Elektromagnet (620) eingerichtet ist.

3. Magnetlager nach einem der Ansprüche 1 oder 2,
wobei die Generatoreinheit (618, 624) mindestens eine im Stator (606) angeordnete Spule (618) und eine mit dem Rotor (612, 624) verbundene Welle mit Permanentmagneten (624) wechselnder Polarität umfasst;
wobei die Generatoreinheit (618, 624) zum Erzeugen der Spannung durch Rotation der Welle eingerichtet ist, so dass die Permanentmagnete die mindestens eine Spule zeitlich wechselnd magnetisch durchfluten und somit eine Spannung induzieren.

4. Magnetlager nach Anspruch 3,
wobei die Generatoreinheit (618, 624) ferner dazu eingerichtet ist, die induzierte Spannung gleichzurichten und zu stabilisieren.

5. Magnetlager nach einem der vorstehenden Ansprüche,
wobei die Regelungseinheit (614) auf einer Platine in dem Stator (606) angeordnet ist;
wobei die Platine insbesondere auf einem flexiblen Träger angeordnet ist;
wobei die Platine insbesondere scheibenartig zumindest im Wesentlichen in mindestens einer zu der Rotationsachse (608) des Rotors (612, 624) zumindest im Wesentlichen senkrechten Ebene angeordnet ist, oder wobei die Platine insbesondere zylindrisch zumindest im Wesentlichen in einem Zylinder um die Rotationsachse (608) des Rotors (612, 624) angeordnet ist.

6. Magnetlager nach einem der vorstehenden Ansprüche,
wobei die Regelungseinheit (614) einen Sensor umfasst;
wobei der Sensor insbesondere zum Auswerten einer Trägerfrequenz, die Aktorströmen für den Elektromagnet (620) überlagert ist, eingerichtet ist.

7. Magnetlager nach einem der vorstehenden Ansprüche, ferner aufweisend:
einen zum Bereitstellen der Versorgungsspannung für die Regelungseinheit (614) eingerichteten Energiespeicher, welcher insbesondere einen Akku und/oder einen Kondensator und/oder einen Superkondensator umfasst.

8. Magnetlager nach einem der vorstehenden Ansprüche, ferner aufweisend:
ein zum Lagern des Stators (606) während eines Stillstands des Stators (606) eingerichtetes Fanglager, welches insbesondere einen Permanent-magnet umfasst.

9. Magnetlager nach Anspruch 8,
wobei das Fanglager ein mechanisches Lager, insbesondere ein aus einem Kugel- oder Gleitlager bestehendes Lager, umfasst.

10. Vakuumgerät, insbesondere Vakuumpumpsystem, insbesondere mit einer Vakuumpumpe, mit einem Magnetlager nach einem der vorherigen Ansprüche.

11. Vakuumgerät nach Anspruch 10, wobei der Rotor (612, 624) an einer angetriebenen Welle befestigt ist.

12. Vakuumgerät nach Anspruch 11, wobei die Welle an einer dem Magnetlager abgewandten Seite mechanisch gelagert ist.

13. Vakuumgerät nach einem der Ansprüche 10 bis 12, wobei das Magnetlager in einem Hochvakuumbereich des Vakuumgeräts angeordnet ist.

## Claims

1. A magnetic bearing, in particular for a vacuum pump, comprising:
a stator (606);
an electromagnet (620);
a rotor (612, 624) supported in the stator (606) by means of at least the electromagnet (620);
a regulation unit (614) configured to regulate a relative position of the rotor (612, 624) with respect to the stator (606) by means of the electromagnet (620); and
a generator unit (618, 624), comprising a generator stator (618) and a generator rotor (624), configured to generate a voltage based on a movement of the rotor (612, 624) with respect to the stator (606) and to provide the generated voltage as a supply voltage for the regulation unit (614),
**characterized in that**,
with respect to an axis of rotation (608) of the rotor (612, 624),
- the rotor (612, 624) is arranged radially outside the stator (606),
- the electromagnet (620) and the regulation unit (614) are arranged above one another in the radial direction,
- the regulation unit (614) and the generator stator (618) are arranged above one another in the radial direction, and
- the electromagnet (620) and the generator stator (618) are arranged above one another in the axial direction.

2. A magnetic bearing in accordance with claim 1,
wherein the generator unit (618, 624) is further configured to provide the generated voltage as a supply voltage for the electromagnet (620).

3. A magnetic bearing in accordance with one of the claims 1 or 2,
wherein the generator unit (618, 624) comprises at least one coil (618) arranged in the stator (606) and a shaft which is connected to the rotor (612, 624) and which has permanent magnets (624) of alternating polarity; wherein the generator unit (618, 624) is configured to generate the voltage by rotation of the shaft such that the permanent magnets magnetically flow through the at least one coil alternately in time and thus induce a voltage.

4. A magnetic bearing in accordance with claim 3,
wherein the generator unit (618, 624) is further configured to rectify and to stabilize the induced voltage.

5. A magnetic bearing in accordance with any one of the preceding claims,
wherein the regulation unit (614) is arranged on a circuit board in the stator (606);
wherein the circuit board is in particular arranged on a flexible carrier;
wherein the circuit board is, in particular in a disk-like manner, arranged at least substantially in at least one plane which is at least substantially perpendicular to the axis of rotation (608) of the rotor (612, 624), or wherein the circuit board is, in particular cylindrically, arranged at least substantially in a cylinder about the axis of rotation (608) of the rotor (612, 624).

6. A magnetic bearing in accordance with any one of the preceding claims,
wherein the regulation unit (614) comprises a sensor;
wherein the sensor is in particular configured to evaluate a carrier frequency which is superimposed on actuator currents for the electromagnet (620).

7. A magnetic bearing in accordance with any one of the preceding claims, further comprising:
an energy store which is configured to provide the supply voltage for the regulation unit (614) and which in particular comprises a rechargeable battery and/or a capacitor and/or a supercapacitor.

8. A magnetic bearing in accordance with any one of the preceding claims, further comprising:
a safety bearing which is configured to support the stator (606) during a standstill of the stator (606) and which in particular comprises a permanent magnet.

9. A magnetic bearing in accordance with claim 8,
wherein the safety bearing comprises a mechanical bearing, in particular a bearing comprising a ball bearing or a plain bearing.

10. A vacuum device, in particular a vacuum pump system, in particular having a vacuum pump, having a magnetic bearing in accordance with any one of the preceding claims.

11. A vacuum device in accordance with claim 10,
wherein the rotor (612, 624) is fastened to a driven shaft.

12. A vacuum device in accordance with claim 11,
wherein the shaft is mechanically supported at a side remote from the magnetic bearing.

13. A vacuum device in accordance with any one of the claims 10 to 12,
wherein the magnetic bearing is arranged in a high-vacuum region of the vacuum device.

## Revendications

1. Palier magnétique, en particulier pour une pompe à vide, comprenant :
un stator (606) ;
un électroaimant (620) ;
un rotor (612, 624) monté dans le stator (606) au moyen d'au moins l'électroaimant (620) ;
une unité de régulation (614) conçue pour réguler une position relative du rotor (612, 624) par rapport au stator (606) au moyen de l'électroaimant (620) ; et
une unité génératrice (618, 624) comprenant un stator générateur (618) et un rotor générateur (624) et conçue pour générer une tension basée sur un mouvement du rotor (612, 624) par rapport au stator (606) et pour fournir la tension générée à titre de tension d'alimentation pour l'unité de régulation (614) ;
**caractérisé en ce que**
par rapport à un axe de rotation (608) du rotor (612, 624)
- le rotor (612, 624) est disposé radialement à l'extérieur du stator (606),
- l'électroaimant (620) et l'unité de régulation (614) sont superposés en direction radiale,
- l'unité de régulation (614) et le stator générateur (618) sont superposés en direction radiale, et
- l'électroaimant (620) et le stator générateur (618) sont superposés en direction axiale.

2. Palier magnétique selon la revendication 1,
dans lequel l'unité génératrice (618, 624) est en outre conçue pour fournir la tension générée à titre de tension d'alimentation pour l'électroaimant (620).

3. Palier magnétique selon l'une des revendications 1 ou 2,
dans lequel l'unité génératrice (618, 624) comprend au moins une bobine (618) disposée dans le stator (606) et un arbre relié au rotor (612, 624) et ayant des aimants permanents (624) de polarité alternée ;
l'unité génératrice (618, 624) est conçue pour générer la tension par rotation de l'arbre, de sorte que les aimants permanents traversent magnétiquement ladite au moins une bobine en alternance dans le temps et induisent ainsi une tension.

4. Palier magnétique selon la revendication 3,
dans lequel l'unité génératrice (618, 824) est en outre conçue pour redresser et stabiliser la tension induite.

5. Palier magnétique selon l'une des revendications précédentes,
dans lequel l'unité de régulation (614) est disposée sur une platine dans le stator (606) ;
la platine est en particulier disposée sur un support flexible ;
la platine est en particulier disposée en forme de disque au moins sensiblement dans au moins un plan au moins sensiblement perpendiculaire à l'axe de rotation (608) du rotor (612, 624), ou
la platine est disposée en particulier sous forme cylindrique au moins sensiblement dans un cylindre autour de l'axe de rotation (608) du rotor (612, 624).

6. Palier magnétique selon l'une des revendications précédentes,
dans lequel l'unité de régulation (614) comprend un capteur ;
le capteur est en particulier conçu pour évaluer une fréquence porteuse superposée à des courants d'actionneur pour l'électroaimant (620).

7. Palier magnétique selon l'une des revendications précédentes, comprenant en outre :
un moyen de stockage d'énergie conçu pour fournir la tension d'alimentation à l'unité de régulation (614), qui comprend en particulier un accumulateur et/ou un condensateur et/ou un supercondensateur.

8. Palier magnétique selon l'une des revendications précédentes, comprenant en outre :
un palier de sécurité conçu pour supporter le stator (606) pendant un arrêt du stator (606) et comprenant en particulier un aimant permanent.

9. Palier magnétique selon la revendication 8,
dans lequel le palier de sécurité comprend un palier mécanique, en particulier un palier constitué d'un roulement à billes ou d'un palier lisse.

10. Appareil à vide, en particulier système de pompage à vide, comprenant en particulier une pompe à vide pourvue d'un palier magnétique selon l'une des revendications précédentes.

11. Appareil à vide selon la revendication 10,
dans lequel le rotor (612, 624) est fixé à un arbre entraîné.

12. Appareil à vide selon la revendication 11,
dans lequel l'arbre est monté mécaniquement sur un côté détourné du palier magnétique.

13. Appareil à vide selon l'une des revendications 10 à 12,
dans lequel le palier magnétique est disposé dans une zone de vide poussé de l'appareil à vide.
